# EUROPÄISCHE PATENTSCHRIFT

(11) **EP 2 394 158 B1**
(45) Veröffentlichungstag und Bekanntmachung des Hinweises auf die Patenterteilung: **16.10.2013**
(21) Anmeldenummer: 10702472.1
(22) Anmeldetag: 29.01.2010
(51) Int. Cl.: G01N 30/10, G01N 30/12

(54) **VORRICHTUNG UND VERFAHREN ZUM AUFBEREITEN VON PROBEN FÜR DIE GASCHROMATOGRAFIE**
APPARATUS AND METHOD FOR PREPARING SAMPLES FOR GAS CHROMATOGRAPHY
DISPOSITIF ET PROCÉDÉ DE PRÉPARATION D'ÉCHANTILLONS POUR LA CHROMATOGRAPHIE GAZEUSE

(30) Priorität: 04.02.2009 DE 102009003429
(43) Veröffentlichungstag der Anmeldung: 14.12.2011
(73) Patentinhaber: joint analytical systems GmbH, 47445 Moers (DE)
(72) Erfinder: GERSTEL, Joachim, 45475 Mülheim an der Ruhr (DE)
(74) Vertreter: Weisse, Renate
(86) Internationale Anmeldenummer: PCT/EP2010/051064
(87) Internationale Veröffentlichungsnummer: WO 2010/089251

(56) Entgegenhaltungen:
- EP-A1- 0 616 214
- WO-A1-03/079001
- WO-A2-2005/040786
- US-A- 4 766 760
- US-A1- 2002 098 594
- US-B1- 6 223 584
- US-B1- 6 402 947
- PEREZ M ET AL: "On-line Reversed Phase LC-GC by using the new TOTAD (Through Oven Transfer Adsorption Desorption) interface: Application to Parathion Residue Analysis" JOURNAL OF MICROCOLUMN SEPARATIONS,, Bd. 11, Nr. 8, 1. Januar 1999 (1999-01-01) , Seiten 582-589, XP002508939 ISSN: 1040-7685 [gefunden am 1999-09-08]

## Beschreibung

### Technisches Gebiet

Die Erfindung betrifft eine Vorrichtung zum Aufbereiten von Proben für die Gaschromatographie enthaltend:
(a) einen mit Trägergas flutbaren, rohrförmigen Liner;
(b) ein gesteuert beheizbares Probenreservoir;
(c) ein im Liner vorhandenes, aktives Material;
(d) ein koaxial um den Liner angeordnetes Außenrohr, wobei zwischen dem Liner und dem Außenrohr ein Hohlraum gebildet ist, welcher mit dem unteren Endbereich des Liners in Verbindung steht;
(e) einen Splitausgang am Außenrohr;
(f) einen am Außenrohr vorgesehenen Trägergas-Anschluss für die Zufuhr von Trägergas in den Hohlraum;
(g) einen Säulenanschluss zum Anschließen einer Gaschromatographie-Säule; und
(h) Steuermittel zum Steuern des Trägergasstroms
   - in einer ersten Einstellung vom Innenraum des Liners durch das aktive Material hindurch, und
   - in einer zweiten Einstellung vom Trägergas-Anschluss in umgekehrter Richtung durch das aktive Material hindurch zum Säulenanschluss.

Die Erfindung betrifft ferner ein Verfahren zum Aufbereiten von Proben für Analysezwecke, enthaltend die Schritte:
(a) Erzeugen eines eine gasförmige Probe enthaltenden Gasstroms durch Verdampfen einer Probe und Erzeugen eines den Probendampf enthaltenden Trägergasstroms;
(b) Leiten des Probendampf enthaltenden Trägergasstroms durch ein aktives Material in einem in einem Außenrohr befindliches Gefäß, wobei das aktive Material derart ausgewählt ist, dass die Probe in dem aktiven Material verbleibt und der Restgasstrom durch das aktive Material hindurchtritt;
(c) Abführen des durch das aktive Material geleiteten Trägergasstroms durch einen zwischen dem Gefäß und dem Außenrohr gebildeten Hohlraum und einen Splitausgang am Außenrohr nach außen;
(d) Erzeugen eines Trägergasstroms durch das aktive Material in umgekehrter Richtung, so dass die im aktiven Material vorliegende Probe vom Trägergasstrom mitgenommen wird; und
(e) Leiten des Proben-Trägergasstroms zu einer Gaschromatographiesäule.

Es ist bekannt Proben mittels einer Probenaufgabeeinrichtung in gaschromatographische Säulen einzuführen. Derartige Probenaufgabeeinrichtungen enthalten einen Probenaufgabekopf, eine mit dem Probenaufgabekopf verbundene, durch eine elektrische Heizung programmiert beheizbare, rohrförmige Probenaufgabekammer, ein in der Probenaufgabekammer angeordnetes Verdampferrohr, in welches an dessen dem Probeaufgabekopf abgewandten Ende das Ende einer gaschromatischen Trennsäule einführbar ist, und Mittel zum Einleiten von Trägergas in das Verdampferrohr.

Solche Probenaufgabekammern sind beispielsweise bekannt durch einen Aufsatz von Schomburg "Probenaufgabe in der Kapillargaschromatographie" in der DE Zeitschrift "LABO Kennziffer Fachzeitschrift für Labortechnik" Ausgabe Juli 1983 Seiten 37 bis 46 und der DE 34 48 091 C3.

Zum Aufgeben einer flüssigen Probe in einen Gaschromatographen wird die Probe üblicherweise in einem Lösungsmittel gelöst, um handhabbare Mengen zu erhalten. Die gelöste Probe wird mittels einer Injektionsnadel über einen Probenaufgabekopf mit einem Septum oder einem beheizten Ventil in einen Trägergasstrom eingespritzt. Der Trägergasstrom transportiert die Probe und das Lösungsmittel durch ein Verdampferrohr. Das Verdampferrohr (Liner), das üblicherweise aus Glas besteht, sitzt in einer Probenaufgabekammer, die durch eine Heizung beheizt wird. Bei der Veröffentlichung in LABO ist die Heizung eine Luftheizung, wobei die Luft durch eine Heizwendel beheizt wird. Bei der DE 34 48 091 C3 ist die Probenaufgabekammer ein Rohr, das von einer Heizwicklung umgeben ist. Das Verdampferrohr sitzt zentral in der rohrförmigen Probenaufgabekammer. Zwischen Verdampferrohr und Probenaufgabekammer ist ein Ringraum gebildet. Die Probenaufnahmekammer und damit das Verdampferrohr sind programmiert beheizbar.

Im "Split"-Betrieb wird erst das leichtflüchtige Lösungsmittel verdampft. Dieses verdampfte Lösungsmittel strömt durch das Verdampferrohr und den Ringraum und wird über einen Split-Auslaß abgeführt. Dann erfolgt durch eine "ballistische" Beheizung auf höhere Temperaturen eine Verdampfung der eigentlichen Probe. Eine Trennsäule, vorzugsweise eine Kapillarsäule, die nur geringe Probenmengen benötigt und verarbeiten kann, ragt mit ihrem Eingangsende in das dem Einlass abgewandte Ende des Verdampferrohres. Die Probe wird von dem Trägergas in die Trennsäule transportiert. Die Trennsäule wird nach einem Temperaturprogramm beheizt.

Da sich in dem Verdampferrohr ein größeres Volumen von Probengas gebildet hat, erfolgt am Eingang der Trennsäule eine "Fokussierung" der Probe. Die Temperatur der Trennsäule wird zunächst niedrig gehalten. Das bedingt auch eine geringe Transportgeschwindigkeit aller Komponenten der Probe in der Trennsäule. Am Eingang der Trennsäule bildet sich ein Pfropfen von Probengas. Bei Erhöhung der Temperatur der Trennsäule treten die Unterschiede der Flüchtigkeiten der verschiedenen Probenkomponenten stärker in Erscheinung und führen zu unterschiedlichen Transportgeschwindigkeiten und damit zu einer Auflösung der Probe in "Peaks", die getrennt nacheinander am Ausgang der Trennsäule erscheinen.

Bekannte Probenaufgabeköpfe erfordern eine aufwändige Probenvorbereitung zur Entfernung einer eventuell störenden Matrix.

In dem Artikel "Monitoring industrial wastewater by online GC-MS with direct aqueous injection" von M.Wortberg, W. Ziemer, M. Kugel, H.Müller und H.-J.Neu in Anal. Bioanal. Chem (2006) 384; 1113-1122 ist eine Anordnung beschrieben, bei welcher ein geschlossener Injektor ohne Splitausgang verwendet wird. In der Verdampfungskammer des Injektors wird die Probe verdampft. Die verdampfte Probe wird anschließend in einen außerhalb der Verdampfungskammer liegenden Liner geleitet. Der Liner ist mit Tenax TA gefüllt. In dem kalten Liner bleibt die Probe, während Wasserdampf entfernt wird. Anschließend wird der Liner erhitzt und die Probe auf die Säule gegeben. WO2005/04786 A2 offenbart eine Anordnung zur Vorkonzentration von Proben für die Gaschromatographie. Die Probe wird durch ein Adsorbens geleitet. Anschließend wird die Probe aus dem Adsorbens in umgekehrter Richtung wieder herausgespült.

US 6,402,947 B1 beschreibt einen Adapter zur automatisierten Überführung einer Probe aus einer Flüssigkchromatographiesäule in eine Gaschromatographiesäule sowohl für reverse Phase als auch für normal Phasen Chromatographie. Die Anordnung weist einen Liner auf, in welchem drei Anschlüsse münden: das Ende einer Flüssigchromatographiesäule, der Eingang einer Gaschromatographiesäule und ein Anschluss zum Abführen von Lösungsmittel. Trägergas strömt in einem Transfer-Modus in den Liner und durch ein in dem Liner befindliches Adsorbens. In einem Transfer-Modus wird die Probe aus der Flüssigkeitschromatographiesäule in den Liner eingebracht. In einem Adsorbtions-Modus wird die Probe von dem Adsorbens adsorbiert und in einem Desorptions-Modus wird das Adsorbens in umgekehrter Richtung mit Trägergas durchströmt und unter Mitnahme der Probe zur Gaschromatographiesäule geleitet. Die Anordnung erfordert eine Vielzahl von Ventilen, Druckreglern und Anschlüssen. Sie ist daher komplex aufgebaut und teuer in der Herstellung.

### Offenbarung der Erfindung

Es ist Aufgabe der Erfindung, eine Vorrichtung und ein Verfahren der eingangs genannten Art zu schaffen, welche die Aufbereitung von Proben vereinfacht und die Richtigkeit der Analysenergebnisse erhöht.

Erfindungsgemäß wird die Aufgabe gelöst durch eine Vorrichtung zum Aufbereiten von Proben für die Gaschromatographie, die dadurch gekennzeichnet ist, dass
(i) der untere Endbereich des Liners gesteuert beheizbar ist;
(j) das Probenreservoir im Liner angeordnet oder mit der Probe in den Liner eingeführt ist,
(k) das aktive Material im gesteuert beheizbaren, unteren Endbereich des Liners vorhanden ist;
(l) der Säulenanschluss zum Anschließen einer Gaschromatographie-Säule oberhalb des aktiven Materials vorhandenen ist;
(m) der Trägergasstrom in der ersten Einstellung vom aktiven Material in den Hohlraum und von dort zum Splitausgang geleitet wird; und
(n) der Trägergasstrom in der zweiten Einstellung in umgekehrter Richtung durch den Hohlraum und anschließend durch das aktive Material geleitet wird.

Bei einer solchen Vorrichtung kann die Probe mit dem Probenreservoir in den Liner eingeführt werden. Alternativ wird die Probe in ein bereits in dem Liner angeordnetes Probenreservoir eingeführt. Das Probenreservoir kann im oberen Endbereich des Liners angeordnet sein. Insbesondere kann das Probenreservoir magnetisch im oberen Endbereich des Liners gehalten sein.

In einer weiteren, alternativen Ausgestaltung, die nicht Teil der Erfindung ist, ist das Probenreservoir außerhalb des Liners angeordnet. Das ist besonders sinnvoll, wenn große Mengen an Probe vorliegen. Bei diesem Ausführungsbeispiel kann das Probenreservoir auch mittels eines Autosamplers aktiviert werden.

Die Anordnung erlaubt das langsame Verdampfen der Probe zusammen mit dem Lösungsmittel unabhängig von der Temperatur des Liners und unabhängig von weiteren Schritten zur Probenvorbereitung.

Die verdampfte Probe gelangt in einem ersten Schritt zusammen mit dem Lösungsmittel in den Liner. Der Liner wird dabei mit Trägergas geflutet. Das Trägergas kann in diesem Schritt über einen Anschluss am Liner oder im Verschluss des Liners zugeführt werden. Die Probe wird mit dem Trägergas durch das aktive Material geleitet und bleibt dort hängen. Das aktive Material kann ein Adsorbens oder ein Phasenmaterial sein. Das aktive Material kann beispielsweise auf einer Glasfritte oder einem durchlässigen Glasboden des Liners in dem Liner angeordnet werden. Das Trägergas tritt durch die Glasfritte oder den Glasboden aus dem Liner unten aus. Von dort gelangt es in den Hohlraum zwischen dem Liner und dem Außenrohr. Über den Splitausgang wird das Trägergas abgeführt.

Wenn die Probe vollständig verdampft ist und sich im Bereich des aktiven Materials befindet, wird der Trägergasstrom in einem zweiten Verfahrensschritt umgekehrt. Das

Trägergas wird nun über den Trägergas-Anschluss am Außenrohr in den Hohlraum zwischen Liner und Außenrohr zugeführt. Dabei wird der zuvor geschlossene Säulenanschluss geöffnet. Das Trägergas strömt nun in umgekehrter Richtung durch den Hohlraum und durch das aktive Material. Dort nimmt es die Probe mit. Anschließend wird es über den Säulenanschluss auf die Säule gegeben.

Vorzugsweise ist das aktive Material beheizbar und/oder kühlbar. Durch Kühlen wird das Zurückhalten der verdampften Probe im ersten Schritt verbessert. Durch Heizen wird das Freisetzen der Probe im zweiten Schritt verbessert.

Mit der erfindungsgemäßen Anordnung wird die Probenmatrix abgeführt, während die Probe im aktiven Material zurückgehalten wird. Die Auswahl des aktiven Materials richtet sich dabei nach der Zusammensetzung der Probe und den Substanzen, welche analysiert werden sollen. In besonders vorteilhafter Weise ermöglicht die Anordnung die Fokussierung von leichtflüchtigen und hochsiedenden Substanzen: hochsiedende Substanzen werden bereits nach einer kurzen Wegstrecke im aktiven Material adsorbiert oder zurückgehalten. Leichtflüchtige Substanzen dringen tiefer in das aktive Material ein. Die Freisetzung erfolgt aber in umgekehrter Richtung, so dass leichtflüchtige Substanzen und hochsiedende Substanzen gleichzeitig am Säulenanschluss anliegen.

Vorzugsweise weist die Anordnung eine Kühlfalle hinter der Säule auf. Die Steuermittel können ferner einen Hilfsgasanschluss hinter der Säule umfassen, mit welchem ein Gasdruck an der Säule erzeugbar ist, welcher ausreicht um ein Eintreten von Trägergas in der ersten Einstellung zu verhindern. Der Hilfsgasanschluss kann vor oder hinter der Kühlfalle angeordnet sein. Durch Einstellung eines höheren Drucks in der Säule als im Liner wird das vorzeitige Eindringen der Probe in die Säule verhindert. Wenn die Probe verdampft ist und das Trägergas in umgekehrter Richtung fließt, wird der Druck in der Säule abgesenkt. Dadurch wird die Probe durch die Säule geleitet. Auf diese Weise werden aufwändige Ventile vermieden.

Auf ähnliche Weise können die Steuermittel druckregulierende Mittel zur Regelung des Drucks am Trägergasanschluss umfassen. Bei Regelung des Drucks auf den Druck im Liner erfolgt keine Trägergaszu- oder -abfuhr. Durch Erhöhung des Drucks wird Trägergas dem Hohlraum zwischen Liner und Außenrohr zugeführt.

Die Vorrichtung kann ein Schließventil im Splitausgang umfassen. Damit kann der Splitausgang geschlossen werden, wenn der Trägergasstrom in der zweiten Einstellung von der Trägergaszufuhr im Außenrohr zum Säulenanschluss geleitet wird.

Die Vorrichtung kann derart gestaltet sein, dass das Probenreservoir eine Aufnahmeeinrichtung zur automatisierten Aufnahme von Proben oder Probenbehältern und Überführungsmittel zum Überführen von Probendampf in den Liner umfasst. Die Überführungsmittel können beispielsweise von einer beheizten Überführungsleitung in den Liner gebildet sein.

Ein erfindungsgemäßes Verfahren ist dadurch gekennzeichnet, dass der Probendampf durch Beheizen eines Probenreservoirs erzeugt wird, welches sich im gleichen Gefäß wie das aktive Material befindet.

Vorzugsweise wird das aktive Material bei Schritt (e) geheizt wird. Hierfür kann eine geeignete Heizungwicklung um das Außenrohr im Bereich des aktiven Materials vorgesehen sein.

In einer weiteren Ausgestaltung der Erfindung wird das aktive Material bei Schritt (c) gekühlt. Hierzu kann ein Kühlmedium in den Bereich des aktiven Materials, beispielsweise in Hohlräume zwischen der Heizwicklung, geleitet werden.

Der Probendampf wird durch Beheizen eines Probenreservoirs erzeugt, welches sich im gleichen Gefäß wie das aktive Material befindet. Das Probenreservoir und das aktive Material können in einem Liner angeordnet sein, der im Bereich des Probenreservoirs eine erste Heizwicklung und im Bereich des aktiven Materials eine zweite Heizwicklung aufweist. Das Probenreservoir kann von einem kleinen Probenrohr gebildet sein, welches koaxial im oberen Bereich des Liners gehalten wird. Der Probendampf, der bei der Heizung erzeugt wird, füllt dann den Liner.

In einer alternativen Ausgestaltung, die nicht Teil der Erfindung ist, wird der Probendampf durch Beheizen eines Probenreservoirs außerhalb des Gefäßes erzeugt, in welchem sich das aktive Material befindet. Das Probenreservoir ist dann in seinen Abmessungen nicht beschränkt. Insbesondere können große Probenreservoire und Autosampler verwendet werden.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine schematischer Schnitt durch eine Probenaufbereitungsanordnung in einer ersten Einstellung;
- Fig.2: zeigt die Probenaufbereitungsanordnung aus Figur 1 in einer zweiten Einstellung.

### Beschreibung des Ausführungsbeispiels

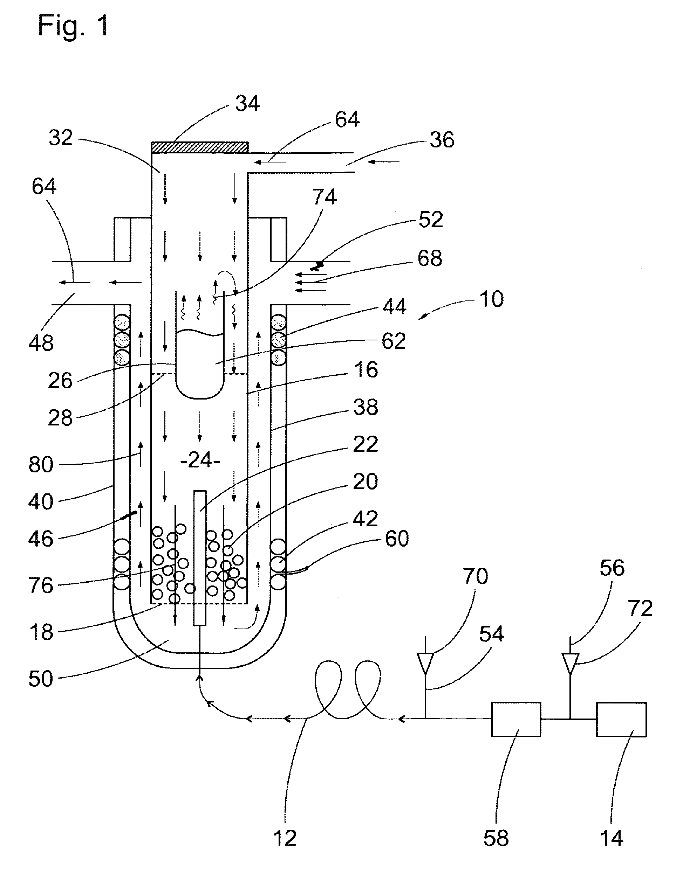

Figur 1 zeigt eine allgemein mit 10 bezeichnete Vorrichtung zum Aufbereiten einer Probe für die Gaschromatographie. Die Vorrichtung 10 ist einer Säule 12 vorgeschaltet. An die Säule 12 ist ein geeigneter Detektor 14 angeschlossen. Säulen 12 und Detektoren 14 sind in der Gaschromatographie allgemein bekannt und brauchen hier daher nicht näher beschrieben werden.

Die Vorrichtung 10 umfasst einen rohrförmigen Liner 16 aus Glas mit einem Innendurchmesser von einigen mm. Der Liner 16 weist einen durchlässigen Boden 18 auf. Auf dem Boden 18 wird ein adsorbierendes Material 20 gehalten. Die Auswahl des adsorbierenden Materials 20 richtet sich nach der analytischen Aufgabenstellung.

Das Ende 22 der Säule 12 verläuft durch den Boden 18 und das adsorbierende Material 20 hindurch in den Innenraum 24 des Liners 16.

Im oberen Bereich des Liners ist ein Probenreservoir 26 gehalten. Hierfür ist eine durchlässige, inerte Halterung 28 vorgesehen. Es versteht sich, dass jede Art von Halterung geeignet ist. Im vorliegenden Ausführungsbeispiel umfasst die Halterung einen Permanentmagneten, welcher einen Stahlring am Probenreservoir 26 hält.

In dem Probenreservoir 26 liegt eine Probe 30 vor, welche mittels Gaschromatographie getrennt und/oder untersucht werden soll. Die Probe ist unbehandelt oder behandelt und darf Feststoffe oder schwerflüchtige Restbestandteile enthalten.

Der Liner 16 ist am oberen Ende 32 mit einem Stopfen 34 verschlossen. Ferner ist im oberen Bereich 32 ein Trägergasanschluss 36 vorgesehen. Über den Trägergasanschluss wird ein Edelgas, Stickstoff oder Wasserstoff oder geeignete andere Trägergase oder Trägergasmischungen aus einer regelbaren Trägergasversorgung (nicht dargestellt) zugeführt.

Der Liner 16 sitzt koaxial in einem Außenrohr 38. Das Außenrohr 38 ist sitzt in einer Hülse 40. Zwischen dieser doppelwandigen Rohrkonstruktion sind zwei Heizwicklungen 42 und 44 vorgesehen. Die Heizwicklungen 42 sind an eine Strom- oder Spannungsquelle angeschlossen und mittels einer Steuereinrichtung regelbar. Die Heizwicklung 42 ist im unteren Bereich um das aktive Material 20 herum angeordnet. Die Heizwicklung 44 ist im oberen Bereich um das Probenreservoir 26 herum angeordnet. Zum Verdampfen der Probe wird ein Heizstrom in der Heizwicklung 44 erzeugt. Dadurch wird der Bereich des Probenreservoirs 26 erhitzt. Zum Beheizen des aktiven Materials wird ein Heizstrom in der Heizwicklung 42 erzeugt. Dadurch wird der Bereich des aktiven Materials 20 erhitzt.

Zwischen dem Außenrohr 38 und dem Liner 16 ist ein Hohlraum 46 gebildet. Der Hohlraum 46 ist im wesentlichen ein Ringraum, der im Bodenbereich 50 über Kanäle oder Durchbrüche mit dem Innenraum des Liners 16 verbunden ist. Im oberen Bereich des Außenrohrs 38 ist ein Splitausgang 48 vorgesehen. Ferner ist im oberen Bereich des Außenrohrs ein Trägergas-Anschluss 52 für die Zufuhr von Trägergas in den Hohlraum vorgesehen.

Ein weiterer Trägergasanschluss 54 ist hinter der Säule 12 vorgesehen. Ein weiterer Trägergasanschluss 56 ist hinter einer hinter die Säule geschaltete Kühlfalle 58 vorgesehen. Kühlmittel kann über eine Kühlmittelzufuhr 60 in Hohlräume zwischen der Heizwicklung 42 geleitet werden. Auf diese Weise kann das aktive Material 20 gekühlt werden.

Die beschriebene Anordnung arbeitet wie folgt:

Zunächst wird eine Probe 62 in ein Probenreservoir 26 gegeben. Das Probenreservoir 26 wird in den geöffneten Liner 16 von oben in die Halterung 28 gebracht. Anschließend wird der Liner 16 verschlossen. Nun wird die Vorrichtung 10 in eine erste Einstellung gebracht, die in Figur 1 gezeigt ist. Bei dieser Einstellung wird Trägergas über den Anschluss 36 in den Liner 16 geleitet. Dies ist durch Pfeile 64 dargestellt.

Gleichzeitig wird das Probenreservoir 26 mit der Probe 62 mittels der Heizung 44 geheizt. Die eingeschaltete Heizwicklung 44 ist durch ausgefüllte Querschnitte symbolisiert. Die Heizwicklung 42 ist kalt. Dies ist durch nicht-ausgefüllte Querschnitte symbolisiert. Stattdessen wird Kühlmittel durch den Anschluss 60 in die Hohlräume zwischen der Heizwicklung 42 geleitet. Auf diese Weise wird das aktive Material 20 gekühlt.

Der Splitausgang 48 ist geöffnet. Dies ist durch einen Pfeil 66 repräsentiert. An den Anschlüssen 52, 54 und 56 wird ein Trägergasdruck angelegt, welcher im Bereich des Gasdrucks in dem Liner 16 liegt oder leicht darüber. Dies ist durch Pfeile 68, 70 und 72 Auf diese Weise wird ein vorzeitiges Eintreten von Gasen verhindert. Die Probe 62 wird beheizt und verdampft nach und nach in den Innenraum 24 des Liners 16. Dies ist durch Pfeile 74 illustriert. Zusammen mit dem Trägergas 64 aus der Zuführung 36 strömt die verdampfte Probe 74 durch das aktive Medium 20. Das Trägergas 64 strömt ungehindert durch das aktive Medium 20. Dies ist durch Pfeile 76 repräsentiert. Die Probe 74 wird vom aktiven Medium 20 adsorbiert und zurückgehalten. Schwerflüchtige, hochsiedende Probenbestandteile bleiben dabei frühzeitig im oberen Bereich des aktiven Mediums 20 hängen. Leichtflüchtige, niedrig siedende Probenbestandteile dringen tief in das aktive Medium 20 ein und bleiben erst im unteren Bereich des aktiven Mediums 20 hängen. Es versteht sich, dass soviel aktives Medium 20 verwendet wird und die Dichte des aktiven Mediums so gewählt wird, dass alle erwünschten Probenbestandteile dort zurückgehalten werden.

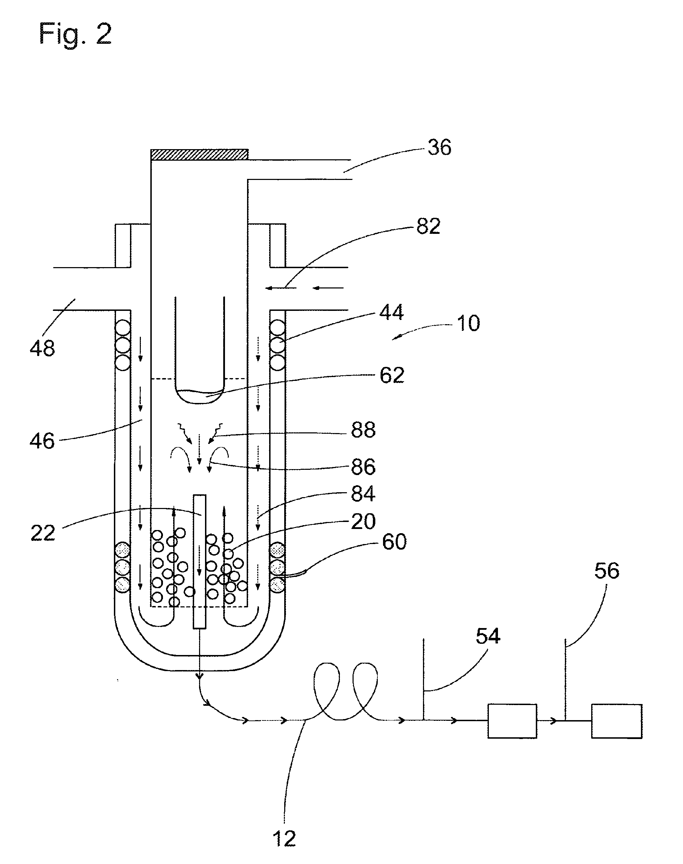

Das Trägergas strömt im Hohlraum 46 nach oben. Das ist durch Pfeile 80 repräsentiert. Durch den Splitausgang 48 wird das Trägergas abgeführt. Die erste Einstellung, die in Figur 1 dargestellt ist, wird beibehalten, bis die Probe 62 im erwünschten Maß verdampft ist. Dabei besteht die Möglichkeit, dass unerwünschte Matrixreste, etwa Feststoffe oder schwerflüchtige Probenbestandteile im Probenreservoir 26 verbleiben (s.Fig.2). Nach der Verdampfung im erfünschten Maß wird die Vorrichtung in eine zweite Einstellung gebracht. Diese ist in Figur 2 dargestellt.

Bei der zweiten Einstellung wird kein Trägergas über den Anschluss 36 zugeführt. Der Splitausgang 48 ist geschlossen. Die Heizung 44 ist abgeschaltet. Die Kühlzufuhr 60 ist abgeschaltet. Der Trägergasdruck an den Anschlüssen 54 und 56 ist abgeschaltet. Gleichzeitig oder anschließend wird das aktive Medium 20 über die Heizwicklung 42 beheizt. Über den Anschluss 52 wird Trägergas in den Hohlraum 46 geleitet. Das ist durch Pfeile 82 und 84 repräsentiert. Man erkennt, dass die Trägergasströmung 84 in der zweiten Einstellung in entgegengesetzter Richtung von oben nach unten in dem Hohlraum 46 erfolgt wie in der ersten Einstellung aus Figur 1.

Das Trägergas wird, ebenfalls in umgekehrter Richtung von unten nach oben, durch das beheizte, aktive Medium 20 geleitet. Durch die Wärme wird die dort zurückgehaltene Probe verdampft. Der Trägergasstrom nimmt die Probe mit. Das durch Pfeile 86 repräsentiert Trägergas und die durch Pfeile 88 repräsentierte Probe fließen durch den Säulenanschluss 22 zur Säule 12. Dort wird die Probe auf bekannte Weise getrennt und analysiert.

Die beschriebene Anordnung hat den Vorteil, dass die Probe langsam verdampft werden kann. Sie braucht nicht aufwändig vorbereitet werden und ermöglicht so die online-Analyse von Prozessen. Mit dem Verfahren liegen schwerflüchtige und leichtflüchtige Bestandteile der Probe getrennt von der Matrix und gleichzeitig im Liner vor. Diese gute Fokussierung ermöglicht besonders scharfe Peaks bei der Trennung in der Säule auch bei langsamer Verdampfung. Eine Flash-Verdampfung ist nicht erforderlich.

Je nach Schaltung der Trägergasanschlüsse 54 und 56 kann die Säule 12 und/oder die Kühlfalle 58 mit Trägergas rückgespült werden. Dabei kann statt des Trägergases auch jedes andere Hilfsgas verwendet werden. Das an diesen Anschlüssen anliegende Gas dient nur zur Aufschaltung und Abschaltung der Säule, sowie der Rückspülung.

Ein weiteres, alternatives Ausführungsbeispiel (nicht dargestellt) arbeitet mit einem Thermodesorptionsrohr. Hier wird keine flüssige Probe verdampft, sondern eine gasförmige Probe durch das Rohr geleitet. Dort werden die zu analysierenden Probenanteile adsorbiert. Das Restgas wird abgeleitet. Durch Rückspülen des Rohrs mit einem Trägergas wird die akkumulierte Probe wieder desorbiert und kann einem geeigneten Analysengerät, etwa einem Gaschromatographen zugeführt werden. Das Rohr ist von dem Analysengerät unabhängig und wird nach dem Adsorptionsprozess umgekehrt an das Analysengerät angekoppelt.

## Patentansprüche

1. Vorrichtung (10) zum Aufbereiten von Proben (62) für die Gaschromatographie, enthaltend
(a) einen mit Trägergas (64) flutbaren, rohrförmigen Liner (16);
(b) ein gesteuert beheizbares Probenreservoir (26);
(c) ein im Liner (16) vorhandenes, aktives Material (20);
(d) ein koaxial um den Liner angeordnetes Außenrohr (38), wobei zwischen dem Liner und dem Außenrohr ein Hohlraum (46) gebildet ist, welcher mit dem unteren Endbereich des Liners in Verbindung steht;
(e) einen Splitausgang (48) am Außenrohr (38);
(f) einen am Außenrohr (38) vorgesehenen Trägergas-Anschluss (52) für die Zufuhr von Trägergas (82) in den Hohlraum (46);
(g) einen Säulenanschluss (22) zum Anschließen einer Gaschromatographie-Säule (12); und
(h) Steuermittel zum Steuern des Trägergasstroms
- in einer ersten Einstellung vom Innenraum (24) des Liners (16) durch das aktive Material (20) hindurch, und
- in einer zweiten Einstellung vom Trägergas-Anschluss (52) in umgekehrter Richtung durch das aktive Material (20) hindurch zum Säulenanschluss (22),
**dadurch gekennzeichnet, dass**
(i) der untere Endbereich des Liners (16) gesteuert beheizbar ist;
(j) das Probenreservoir (26) im Liner (16) angeordnet oder mit der Probe in den Liner (16) eingeführt ist,
(k) das aktive Material (20) im gesteuert beheizbaren, unteren Endbereich des Liners (16) vorhanden ist;
(l) der Säulenanschluss (22) zum Anschließen einer Gaschromatographie-Säule (12) oberhalb des aktiven Materials (20) vorhandenen ist;
(m) der Trägergasstrom in der ersten Einstellung vom aktiven Material in den Hohlraum (46) und von dort zum Splitausgang (48) geleitet wird; und
(n) der Trägergasstrom in der zweiten Einstellung in umgekehrter Richtung durch den Hohlraum (46) und anschließend durch das aktive Material (20) geleitet wird.

2. Vorrichtung nach Anspruch 1, **dadurch gekennzeichnet, dass** das Probenreservoir (26) im oberen Endbereich des Liners (16) angeordnet ist.

3. Vorrichtung nach Anspruch 2, **dadurch gekennzeichnet, dass** das Probenreservoir magnetisch im oberen Endbereich des Liners (16) angeordnet ist.

4. Vorrichtung nach einem der vorgehenden Ansprüche, **dadurch gekennzeichnet, dass** das aktive Material (20) ein Adsorbens oder ein Phasenmaterial ist.

5. Vorrichtung nach einem der vorgehenden Ansprüche, **dadurch gekennzeichnet, dass** das aktive Material (20) beheizbar und/oder kühlbar ist.

6. Vorrichtung nach einem der vorgehenden Ansprüche, **gekennzeichnet durch** eine Kühlfalle (58) hinter der Säule (12).

7. Vorrichtung nach einem der vorgehenden Ansprüche, **dadurch gekennzeichnet, dass** die Steuermittel einen Hilfsgasanschluss (54;56) hinter der Säule (12) umfassen, mit welchem ein Gasdruck an der Säule (12) erzeugbar ist, welcher ausreicht um ein Eintreten von Trägergas in der ersten Einstellung zu verhindern.

8. Vorrichtung nach einem der vorgehenden Ansprüche, **dadurch gekennzeichnet, dass** die Steuermittel druckregulierende Mittel zur Regelung des Drucks am Trägergasanschluss (52) umfassen.

9. Vorrichtung nach einem der vorgehenden Ansprüche, **gekennzeichnet durch** ein Schließventil im Splitausgang (48).

10. Vorrichtung nach einem der vorgehenden Ansprüche 1 oder 3 bis 9, **dadurch gekennzeichnet, dass** das Probenreservoir eine Aufnahmeeinrichtung zur automatisierten Aufnahme von Proben oder Probenbehältern und Überführungsmittel zum Überführen von Probendampf in den Liner umfasst.

11. Verfahren zum Aufbereiten von Proben für Analysezwecke, enthaltend die Schritte:
(a) Erzeugen eines eine gasförmige Probe enthaltenden Gasstroms durch Verdampfen (74) einer Probe und Erzeugen eines den Probendampf enthaltenden Trägergasstroms;
(b) Leiten des Probendampf enthaltenden Trägergasstroms durch ein aktives Material (20) in einem in einem Außenrohr befindliches Gefäß (16), wobei das aktive Material (20) derart ausgewählt ist, dass die Probe in dem aktiven Material (20) verbleibt und der Restgasstrom (76) durch das aktive Material hindurchtritt;
(c) Abführen des durch das aktive Material geleiteten Trägergasstroms (80) durch einen zwischen dem Gefäß und dem Außenrohr gebildeten Hohlraum (46) und einen Splitausgang (48) am Außenrohr (38) nach außen;
(d) Erzeugen eines Trägergasstroms durch das aktive Material (20) in umgekehrter Richtung, so dass die im aktiven Material vorliegende Probe vom Trägergasstrom mitgenommen wird; und
(e) Leiten des Proben-Trägergasstroms (86, 88) zu einer Gaschromatographiesäule (12),
**dadurch gekennzeichnet, dass**
(f) der Probendampf durch Beheizen eines Probenreservoirs (26) erzeugt wird, welches sich im gleichen Gefäß (16) wie das aktive Material befindet.

12. Verfahren nach Anspruch 11, **dadurch gekennzeichnet, dass** das aktive Material bei Schritt (d) geheizt wird.

13. Verfahren nach einem der Ansprüche 11 bis 12, **dadurch gekennzeichnet, dass** das aktive Material bei Schritt (b) gekühlt wird.

## Claims

1. Device (10) for the preparation of samples (62) for gas chromatography, comprising
(a) a tubular liner (16) adapted to be flushed with carrier gas (64);
(b) a controllably heated sample reservoir (26);
(c) an active material (20) present in the liner (16);
(d) an outer tube (38) coaxially arranged around the liner, wherein a space (46) is formed between the liner and the outer tube (38), the space being in contact with the lower end portion of the liner;
(e) a split outlet (48) at the outer tube (38);
(f) a carrier gas connection (52) provided at the outer tube (38) for feeding carrier gas (82) into the space (46);
(g) a column connection (22) above the active material (20) for connecting a gas chromatographic column (12); and
(h) control means for controlling the carrier gas flow
- in a first setting from the inside (24) of the liner (16) through the active material (20), and
- in a second setting from the carrier gas connection (52) in the opposite direction through through the active material (20) to the column connection (22);
**characterized in that**
(i) the lower end portion of the liner (16) is adapted to be controllably heated;
(j) the sample reservoir (26) is placed inside the liner (16) or is adapted to be inserted into the liner together with the sample;
(k) the active material (20) is present in the controllably heated, lower end portion of the liner;
(l) the column connection (22) for connecting a gas chromatographic column (12) is present above the active material (20);
(m) the carrier gas flow is flowed in the first setting from the active material into the space (46) and from there to the split outlet (48); and
(n) the carrier gas flow in the second setting flows in the opposite direction through the space (46) and afterwards through the active material (20).

2. Device according to claim 1, **characterized in that** the sample reservoir (26) is present in the upper end portion of the liner (16).

3. Device according to claim 2, **characterized in that** the sample reservoir is magnetically mounted in the upper end portion of the liner (16).

4. Device according to any of the preceding claims, **characterized in that** the active material (20) is an adsorbens or a phase material.

5. Device according to any of the preceding claims, **characterized in that** the active material (20) can be heated and/or cooled.

6. Device according to any of the preceding claims, **characterized by** a cooling trap (58) downstream the column (12).

7. Device according to any of the preceding claims, **characterized in that** the control means comprise an auxiliary gas connection (54; 56) downstream the column (12) adapted to generate a gas pressure inside the column (12) which is sufficient to avoid carrier gas entering in the first setting.

8. Device according to any of the preceding claims, **characterized in that** the control means comprise pressure controlling means for controlling the pressure at the carrier gas connection (52).

9. Device according to any of the preceding claims, **characterized by** a shut-off valve in the split outlet (48).

10. Device according to any of the preceding claims 1 or 3 to 9, **characterized in that** the sample reservoir comprises a receiving device for automated reception of samples or sample containers and transfer means for transferring sample vapour into the liner.

11. Method for the preparation of samples for analytic purposes, comprising the steps of:
(a) generating a gas flow comprising a gaseous sample by evaporation (74) of a sample and generating a carrier gas flow containing the sample vapour;
(b) flowing the carrier gas flow comprising the sample vapour through an active material (20) comprised in a container placed in an outer tube the active material selected in such a way that the sample remains in the active material (20) and the remaining gas flow (76) passes through the active material;
(c) removing the carrier gas flow (80) passed through the active material through a space formed between the container and the outer tube and through a split outlet towards the outside;
(d) generating a carrier gas flow through the active material (20) in the opposite direction in order to include the sample contained in the active material into the carrier gas flow; and
(e) flowing the sample-carrier gas flow (86, 88) to a gas chromatography column (12),
**characterized in that**
(f) the sample vapour is generated by heating a sample reservoir (26) which is present in the same container (16) as the active material.

12. Method according to claim 11, **characterized in that** the active material is heated during step (d).

13. Method according to any of claims 11 to 12, **characterized in that** the active material is cooled during step (b).

## Revendications

1. Dispositif (10) pour la préparation d'échantillons (62) pour la chromatographie en phase gazeuse, comprenant
(a) un insert (16) tubulaire, pouvant être baigné par un gaz vecteur (64) ;
(b) un réservoir à échantillons (26) pouvant être chauffé par commande ;
(c) un matériau actif (20) présent dans l'insert (16) ;
(d) un tube externe (38) disposé coaxialement autour de l'insert, un espace creux (46) relié à la zone d'extrémité inférieure de l'insert étant formé entre l'insert et le tube externe ;
(e) une sortie de split (48) située sur le tube externe (38) ;
(f) un raccord pour gaz vecteur (52) prévu sur le tube externe (38) et destiné à l'amenée du gaz vecteur (82) dans l'espace creux (46) ;
(g) un raccord de colonne (22) destiné à raccorder une colonne de chromatographie en phase gazeuse (12) ; et
(h) des moyens de commande destinés à commander le courant de gaz vecteur
- dans un premier réglage de l'espace interne (24) de l'insert (16) au travers du matériau actif (20), et
- dans un second réglage du raccord pour gaz vecteur (52) dans le sens inverse au travers du matériau actif (20) vers le raccord de colonne (22),
**caractérisé en ce que**
(i) la zone d'extrémité inférieure de l'insert (16) peut être chauffée par commande ;
(j) le réservoir d'échantillons (26) est disposé dans l'insert (16) ou introduit avec l'échantillon dans l'insert (16) ;
(k) le matériau actif (20) est présent dans la zone d'extrémité inférieure de l'insert (16) pouvant être chauffée par commande ;
(l) le raccord de colonne (22) destiné à raccorder une colonne de chromatographie en phase gazeuse (12) est présent au-dessus du matériau actif (20) ;
(m) le courant de gaz vecteur est guidé au cours du premier réglage du matériau actif dans l'espace creux (46) et de là vers la sortie de split (48) ; et
(n) le courant de gaz vecteur est guidé au cours du second réglage en sens inverse à travers l'espace creux (46) et pour finir à travers le matériau actif (20).

2. Dispositif selon la revendication 1, **caractérisé en ce que** le réservoir à échantillons (26) est disposé dans la zone d'extrémité supérieure de l'insert (16).

3. Dispositif selon la revendication 2, **caractérisé en ce que** le réservoir à échantillons (26) est disposé, de manière magnétique, dans la zone d'extrémité supérieure de l'insert (16).

4. Dispositif selon l'une quelconque des revendications précédentes, **caractérisé en ce que** le matériau actif (20) est un adsorbant ou un matériau à changement de phase.

5. Dispositif selon l'une quelconque des revendications précédentes, **caractérisé en ce que** le matériau actif (20) peut être chauffé et/ou refroidi.

6. Dispositif selon l'une quelconque des revendications précédentes, **caractérisé par** un piège froid (58) situé en aval de la colonne (12).

7. Dispositif selon l'une quelconque des revendications précédentes, **caractérisé en ce que** les moyens de commande comprennent un raccord de gaz auxiliaire (54 ; 56) situé en aval de la colonne (12) et permettant de générer une pression gazeuse sur la colonne (12) qui suffit à empêcher l'entrée du gaz vecteur au cours du premier réglage.

8. Dispositif selon l'une quelconque des revendications précédentes, **caractérisé en ce que** les moyens de commande comprennent des moyens de réglage de la pression destinés à régler la pression au niveau du raccord de gaz vecteur (52).

9. Dispositif selon l'une quelconque des revendications précédentes, **caractérisé par** une vanne de fermeture située dans la sortie de split (48).

10. Dispositif selon l'une quelconque des revendications précédentes 1 ou 3 à 9, **caractérisé en ce que** le réservoir d'échantillons comprend un dispositif de logement destiné à loger de manière automatisée des échantillons ou des réservoirs d'échantillons et des moyens de transfert destinés à transférer la vapeur des échantillons dans l'insert.

11. Procédé pour la préparation d'échantillons à des fins d'analyse, comprenant les étapes de :
(a) génération d'un courant gazeux contenant un échantillon gazeux par évaporation (74) d'un échantillon et génération d'un courant de gaz vecteur contenant la vapeur d'échantillon ;
(b) passage du courant de gaz vecteur contenant la vapeur d'échantillon à travers un matériau actif (20) dans un récipient (16) se trouvant dans un tube externe, le matériau actif (20) étant sélectionné de telle manière que l'échantillon reste dans le matériau actif (20) et le courant de gaz restant (76) traverse le matériau actif ;
(c) évacuation vers l'extérieur du courant de gaz vecteur (80) traversant le matériau actif par un espace creux (46) formé entre le récipient et le tube externe et par une sortie de split (48) située sur le tube externe (38) ;
(d) génération d'un courant de gaz vecteur à travers le matériau actif (20) en sens inverse de sorte que l'échantillon se trouvant dans le matériau actif est entraîné par le courant de gaz vecteur ; et
(e) guidage du courant de gaz vecteur contenant l'échantillon (86, 88) vers une colonne de chromatographie en phase gazeuse (12),
**caractérisé en ce que**
(f) la vapeur d'échantillon est générée en chauffant un réservoir à échantillons (26) se trouvant dans le même récipient (16) que le matériau actif.

12. Procédé selon la revendication 11, **caractérisé en ce que** le matériau actif est chauffé à l'étape (d).

13. Procédé selon l'une quelconque des revendications 11 à 12, **caractérisé en ce que** le matériau actif est refroidi à l'étape (b).
